# EUROPEAN PATENT SPECIFICATION

(11) **EP 1 795 376 B1**
(45) Date of publication and mention of the grant of the patent: **24.02.2010**
(21) Application number: 05781945.0
(22) Date of filing: 06.09.2005
(51) Int. Cl.: B60C 17/00, B60C 15/02, B60C 15/06, B29D 30/30

(54) **RUN FLAT TIRE AND METHOD OF MANUFACTURING RUN FLAT TIRE**
RUN-FLAT-REIFEN UND VERFAHREN ZUR HERSTELLUNG EINES RUN-FLAT-REIFENS
PNEU À FLANCS RENFORCÉS ET PROCÉDÉ DE FABRICATION DU PNEU À FLANCS RENFORCÉS

(30) Priority: 09.09.2004 JP 2004262416; 04.10.2004 JP 2004291457; 22.10.2004 JP 2004308427
(43) Date of publication of application: 13.06.2007
(73) Proprietor: Toyo Tire & Rubber Co. Ltd., Osaka-shi, Osaka 550-8661 (JP)
(72) Inventor: Segawa, Masahiro, c/o TOYO TIRE & RUBBER CO., LTD., Osaka-shi, Osaka 5508661 (JP); Kanai, Masayuki, c/o TOYO TIRE & RUBBER CO., LTD., Osaka-shi, Osaka 5508661 (JP)
(74) Representative: Popp, Eugen
(86) International application number: PCT/JP2005/016323
(87) International publication number: WO 2006/028083

(56) References cited:
- FR-A- 2 346 171
- JP-A- 5 310 013
- JP-A- 50 082 701
- JP-A- 51 116 507
- JP-A- 2003 191 722

## Description

### Technical Field

The present invention relates to a so-called double bead type run flat tire provided with a reinforcing rubber layer arranged in a side wall section, an annular protrusion section protruding to an outer side in a tire width direction of a bead section, and a bead arranged in the annular protrusion section, and a manufacturing method of the run flat tire.

### Background Art

The run flat tire means a tire which can safely travel at a certain degree of distance even in the case that an air pressure in an inner section of the tire is lowered due to a fault such as a puncture or the like. As one of the tire structures for enabling a run flat travel, there has been known a run flat tire provided with a reinforcing rubber layer in a side wall section. In accordance with the run flat tire mentioned above, when the air pressure in the inner section of the tire is lowered due to the fault such as the puncture or the like, the reinforcing rubber layer supports the tire so as to prevent the tire from completely flattening, whereby the run flat travel can be executed.

However, in a state in which the air pressure in the inner section of the tire is lowered, a pressing to a rim of the bead section is weakened. Accordingly, there is a problem that a fitting force to the rim is lowered, and the bead section tends to be disengaged from the rim. Therefore, there has been proposed a so-called double bead type run flat tire in which a bead is arranged in an annular protrusion section protruding to an outer side in a tire width direction of the bead section, in addition to a bead arranged in an outer peripheral side of a bead sheet section of the rim (refer to the following patent documents 1 to 3).

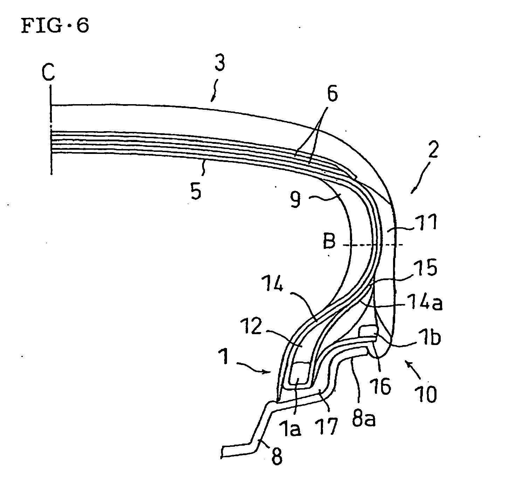

Fig. 6 is a tire meridian cross sectional view showing a conventional double bead type run flat tire. A side wall rubber 11 is arranged in an outer side of a side wall section 2, and a reinforcing rubber layer 9 formed in an approximately crescent cross sectional shape is arranged in an inner side thereof. A bead section 1 is provided with a bead 1a and a bead filler 12, and a carcass ply 14 is wound up from an inner side to an outer side in such a manner as to pinch them. An annular protrusion section 10 is formed so as to protrude to an outer side in a tire width direction of the bead section 1, and an annular bead 1b is arranged there. A reinforcing layer 16 is arranged along an inner peripheral surface of the annular protrusion section 10, and a rim strip rubber 17 is arranged in a section directly brought into contact with a rim 8. In accordance with the structure mentioned above, since the annular protrusion section 10 reinforced by the bead 1b holds a rim flange 8a, it is possible to suppress a rim disengagement at a run flat traveling time.

However, as a result of researches by the inventors of the present invention, the double bead type run flat tire mentioned above has a problem which is not provided in the conventional single bead type run flat tire. In other words, conventionally, in a side reinforcing type run flat tire, a bending deformation of the side wall section 2 at the run flat traveling time is suppressed by arranging a wind-up section 14a of a carcass ply 14 to a position of an outer side in a tire width direction of the reinforcing rubber layer 9, as shown in Fig. 6 (for example, refer to the following patent documents 4 and 5). However, in the double bead type run flat tire, since the annular protrusion section 10 is structured such as to hold the rim flange 8a, there is generated a stress directed toward an outer side in the tire diametrical direction from the bead 1b, in addition to a stress applying to the annular protrusion section 10 from the rim flange 8a, and there is a problem that a shear strain is generated in the wind-up section 14a of the carcass ply 14 so as to lower a durability.

Particularly, if a wind-up end section 15 of the carcass ply 14 is arranged near a maximum bent section B of the reinforcing rubber layer 9, there is a tendency that a stress is concentrated on the wind-up end section 15 at a time when the reinforcing rubber layer 9 is bent at the run flat traveling time, and a crack tends to be generated. Further, in the case that the wind-up end section 15 is arranged in such a manner as to reach a position of an end section of the belt layer 6, an increase of a tire weight is caused, and there is a risk that a ply cord cut is generated by a compression stress applied to the wind-up section 14a of the carcass ply 14 at the run flat traveling time.

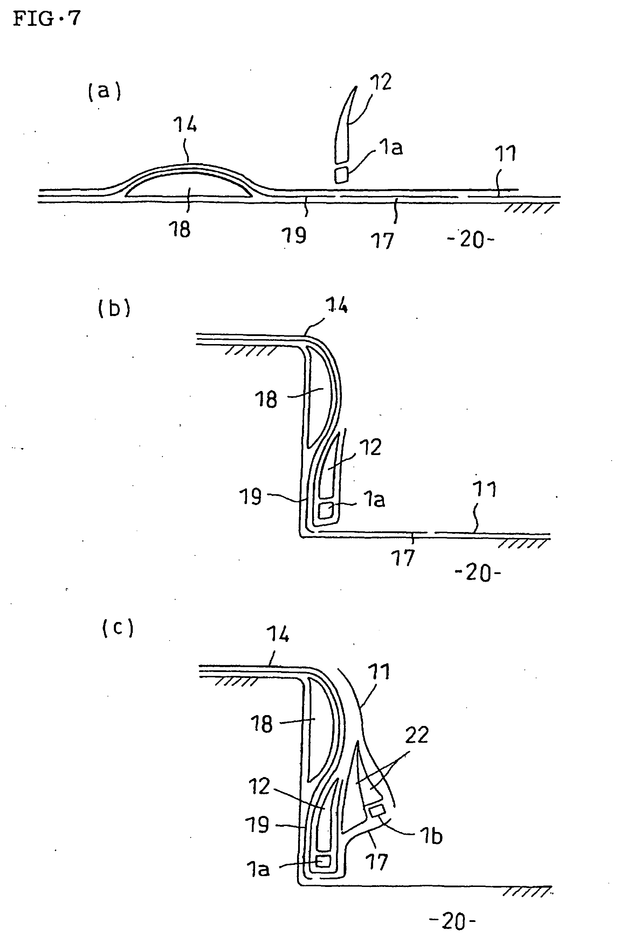

The run flat tire mentioned above is manufactured via manufacturing steps shown below. In other words, as shown in Figs. 7(a) to 7(c) sequentially, an outer peripheral surface of a forming drum is set to a surface to be formed 20, and in an outer peripheral side, there are arranged respectively a reinforcing rubber member 18 forming the reinforcing rubber layer 9, an inner liner rubber 19 forming an inner liner layer 5, the rim strip rubber 17 and the side wall rubber 11. Further, the carcass ply 14 is arranged in an outer peripheral side thereof, and a bead 1a and a bead filler 12 are outside inserted to predetermined positions. Subsequently, a center section (a left side in Fig. 7) is protruded by an expanding mechanism such as a bladder or the like, and an end section of the carcass ply 14 is wound up in such a manner as to pinch the bead 1a and the bead filler 12. A rubber member 22 constituting the annular protrusion section 10 and the bead 1b are arranged in an outer side of the wound-up carcass ply 14, and the rim strip rubber 17 and the side wall rubber 11 are wound up. Thereafter, a green tire is formed by forming the belt layer 6 and the like, and the step goes to a vulcanizing step.

As mentioned above, in the manufacturing method of the run flat tire mentioned above, a lot of man hour and a lot of parts are necessary for forming the bead section 1 and the annular protrusion section 10, thereby deteriorating a productivity Further, since a manufacturing dispersion is generated in a formed product by pasting a lot of members, there is a tendency that a tire uniformity is lowered.
Patent Document 1: Japanese Patent Application Laid-open No. S51-116507
Patent Document 2: Japanese Patent Application Laid-open No. S53-138106
Patent Document 3: Japanese Patent Application Laid-open No. 2002-178725
Patent Document 4: Japanese Patent Application Laid-open No. H5-310013
Patent Document 5: Japanese Patent Application Laid-open No. 2000-52724

### Disclosure of the Invention

### Problem to be Solved by the Invention

The present invention is made by taking the actual conditions mentioned above into consideration, and an object of the present invention is to provide a double bead type run flat tire having an excellent durability, and a manufacturing method of the run flat tire.

### Means for Solving the Problem

The object can be achieved by the present invention having the following structure. That is, the present invention provides a run flat tire comprising the features of claim 1.

In accordance with the structure mentioned above, since the wind-up end section of the carcass ply is arranged at a position having a height equal to or less than 95 % the height to a tire inner peripheral side end of the second bead on the basis of a tire outer peripheral side end of the first bead, the wind-up section of the carcass ply is hard to be affected by the stress directed toward the outer side in the tire diametrical direction from the second bead. Accordingly, the shear strain is not generated in the wind-up section of the carcass ply even at the run flat traveling time, whereby it is possible to secure a durability. Further, since it is possible to avoid a stress concentration to the wind-up end section and a compression stress applied to the wind-up section, at a time when the reinforcing rubber layer is bent at the run flat traveling time, it is possible to suppress generation of a crack and a ply cord cut. Further, since the wind-up of the carcass ply is less than the conventional double bead type run flat tire, it is possible to lower a tire weight and a rolling resistance, and it is possible to achieve an effect of improving a ride comfort and reducing a noise.

In the above structure, it is preferable that the run flat tire is provided with a fiber layer segmenting the reinforcing rubber layer in the tire width direction. Accordingly, if the crack is generated in the reinforcing rubber layer, it is possible to prevent a development of the crack by the fiber layer, and it is possible to more effectively improve the durability at the run flat traveling time.

In the above structure, it is preferable that a rate T/H of a thickness T in a maximum width position of the crescent shape of the reinforcing rubber layer with respect to a tire cross sectional height H is between 0.07 and 0.09. In the run flat tire in accordance with the present invention, the effect of suppressing the bending deformation of the side wall section in the run flat state can be achieved by the annular protrusion section reinforced by the second bead being pressed to the outer peripheral side curved surface of the rim flange. Accordingly, it is possible to reduce a volume of the reinforcing rubber layer so as to intend to lighten the tire, at a degree that the bending deformation of the side wall section is suppressed. In other words, in the conventional side reinforcing type run flat tire, a rate T/H mentioned above is more than 0.09 and is about 0.11. On the contrary, in the present invention, it is possible to set the rate T/H mentioned above to 0.07 to 0.09, and it is possible to intend to lighten the tire without obstructing the run flat durability.

In the above structure, it is preferable that the carcass layer is constituted by one carcass ply, whereby it is possible to effectively intend to lighten the tire.

In accordance with the structure mentioned above, it is possible to simplify the formation of the annular protrusion section so as to improve a productivity, and it is possible to suppress the generation of the separation even against a shock repeatedly transmitted from the rim flange during the traveling so as to effectively secure the durability.

In the above structure, it is preferable that at least one of the first bead and the second bead is integrally formed in a member obtained by integrally forming the bead filler and the annular rubber body. Accordingly, it is possible to reduce a man hour and a number of parts necessary for forming the bead section or the annular protrusion section, and it is possible to simplify the work so as to further improve the productivity.

Further, in accordance with the present invention, there is provided a manufacturing method of a run flat tire, comprising the features of claim 6.

In accordance with the manufacturing method of the run flat tire of the present invention, the wind-up end section of the carcass ply is hard to be affected by a stress directed to the outer side in the tire diametrical direction from the second bead and a bend of the reinforcing rubber layer, as mentioned above. As a result, it is possible to suppress a strain concentration to the wind-up end section, and it is possible to more effectively improve a durability.

In accordance with the structure mentioned above, a man hour is reduced in comparison with the conventional structure, by winding up the section near the end section of the carcass ply and the rim strip in a state in which the members constituting the bead section and the annular protrusion section are arranged at the predetermined positions, it is possible to simplify the formation of the bead section and the annular protrusion section so as to improve a productivity, and it is possible to reduce a number of the parts. Further, a manufacturing dispersion becomes smaller, and a uniformity of the tire is improved, in comparison with the manufacturing method of pasting a lot of members.

In the above method, it is preferable that at least one of the first bead and the second bead is integrally formed with the member obtained by integrally forming the bead filler and the annular rubber body. Accordingly, it is possible to effectively reduce a man hour and a number of the parts necessary for forming the bead section or the annular protrusion section, and it is possible to simplify the work so as to more improve a productivity.

### Brief Description of the Drawings

Fig. 1 is a half cross sectional view showing an example of a run flat tire in accordance with the present invention;
Fig. 2 is a cross sectional view of a main section schematically showing a bead section of the tire shown in Fig. 1;
Fig. 3 is a half cross sectional view showing an example of a run flat tire in accordance with the present invention;
Fig. 4 is a cross sectional view of a main section schematically showing a bead section of the tire shown in Fig. 3;
Fig. 5 is a cross sectional schematic view explaining a manufacturing method of the run flat tire in accordance with the present invention;
Fig. 6 is a tire meridian cross sectional view showing an example of a conventional run flat tire; and
Fig. 7 is a cross sectional schematic view explaining a manufacturing method of the conventional run flat tire.

### Description of Reference Numerals

- 1: bead section
- 1a: bead (first bead)
- 1b: bead (second bead)
- 2: side wall section
- 4: carcass layer
- 8: rim
- 8a: rim flange
- 9: reinforcing rubber layer
- 10: annular protrusion section
- 11: side wall rubber
- 12: bead filler
- 13: annular rubber body
- 14: carcass ply
- 15: wind-up end section
- 17: rim strip rubber

### Best Mode for Carrying Out the Invention

An embodiment of the present invention will be explained with reference to the drawings.

### [structure of run flat tire]

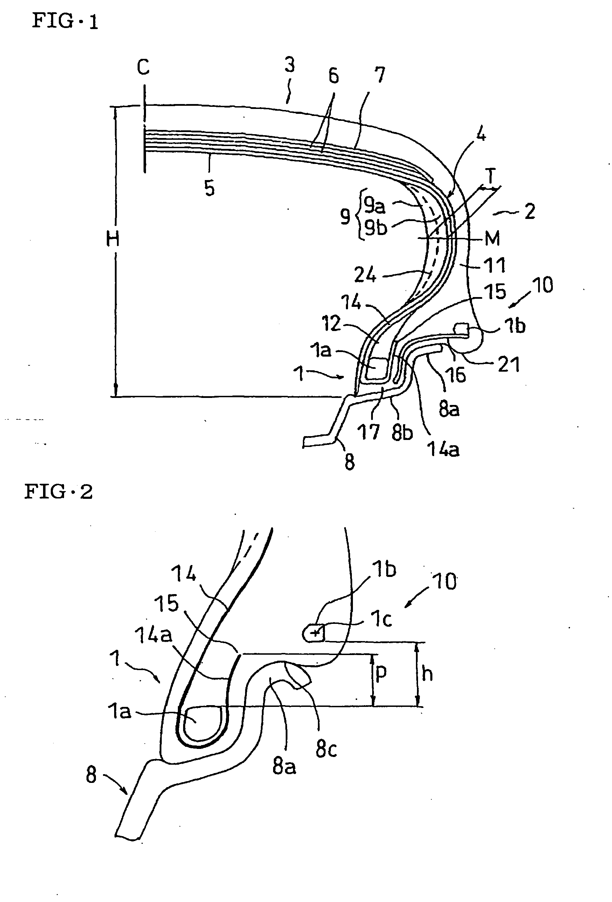

Fig. 1 is a tire meridian half cross sectional view showing an example of a run flat tire in accordance with the present invention. The run flat tire is provided with a pair of bead sections 1, side wall sections 2 respectively extending to outer sides in a tire diametrical direction from the bead sections 1, and a tread section 3 connected to respective outer peripheral side ends of the side wall sections 2.

A bead 1a (corresponding to the first bead) in which a converged body of bead wires is formed in an annular shape in a tire peripheral direction is arranged in the bead section 1, and a bead filler 12 having a triangular cross sectional shape extending in a tire diametrical direction is arranged in a tire outer periphery of the bead 1a. The bead section 1 is arranged in a tire outer peripheral side of a bead sheet section 8b of a rim 8, and is pressed by the rim flange 8a under a normal tire internal pressure, and the tire is fitted to the rim 8. A rim strip rubber 17 which is excellent in an abrasion resistance is arranged in a section which is directly brought into contact with the rim 8.

A carcass layer 4 is constituted by a carcass ply 14 in which a cord is arranged at an angle of about 90 degrees with respect to a tire equator line C, and is arranged in such a manner as to be bridged between a pair of bead sections 1. The carcass layer 4 may be constituted by a plurality of carcass plies, however, it is preferable that the carcass layer 4 is constituted by one carcass ply 14 as in the present embodiment, whereby it is possible to intend to lighten the tire.

An inner liner layer 5 for holding an air pressure is arranged in an inner peripheral side of the carcass layer 4, and a belt layer 6 and a belt reinforcing layer 7 for reinforcing on the basis of a hoop effect are arranged in an outer peripheral side of the carcass layer 4. The belt layer 6 is constituted by two belt plies in which the cords are arranged at an angle of about 20 degrees with respect to the tire equator line C, and is laminated in such a manner that the steel cords intersect in inverse directions between the belt plies.

In this case, a steel wire or the like is used as the bead wire, and a steel or an organic fiber such as a polyester, a rayon, a nylon, an aramid or the like is used as the cord constituting the carcass ply and the belt ply. A surface treatment, an adhesive treatment or the like is applied to the cords in order to increase an adhesive property with a rubber.

A side wall rubber 11 is arranged in an outer side of the side wall section 2. A reinforcing rubber layer 9 having an approximately crescent cross sectional shape is arranged in an inner side of the carcass layer 4 of the side wall section 2. Accordingly, a bending deformation of the tire is suppressed at a time when an air pressure in an inner section of the tire is lowered, and a run flat travel can be achieved. In this case, the reinforcing rubber layer 9 provided in the run flat tire in accordance with the present invention can be applied without being particularly limited by a thickness, a hardness or the like, as far as the reinforcing rubber layer is used in the conventional side reinforcing type run flat tire.

In the present embodiment, the reinforcing rubber layer 9 is segmented in a tire width direction by a fiber layer 24, and is constituted by two layers comprising a rubber layer 9a arranged in an inner side of the fiber layer 24 and a rubber layer 9b arranged in an outer side of the fiber layer 24. Accordingly, in the case that a crack is generated in the reinforcing rubber layer 9 by some chance, a development of the crack is prevented by the fiber layer 24. Accordingly, a durability is effectively improved. As the rubber layers 9a and 9b, there can be listed up, for example, a rubber layer in which a hardness in accordance with JISK6253 durometer hardness test (A type) is between 65 degree and 90 degree. In this case, the reinforcing rubber layers 9a and 9b constituting the reinforcing rubber layer 9 are not limited to the rubber layer in which a physical property such as a thickness, a length in a diametrical direction, a hardness or the like is the same.

An annular protrusion section 10 is formed in an outer side in the tire width direction of the bead section 1. The annular protrusion section 10 protrudes to an outer side in the tire width direction from the rim flange 8a, and has an inner peripheral surface extending along an outer peripheral side curved surface of the rim flange 8a. A sharp head section 21 positioned in a leading end side of the inner peripheral surface is set to a smaller diameter in comparison with an outer diameter of the rim flange 8a, and the annular protrusion section 10 is formed so as to hold the rim flange 8a. The annular protrusion section 10 is preferably formed in each of the bead sections 1 in both sides, however, may be formed in at least one bead section 1, for example, and may be formed only in a side forming an outer side of a vehicle at a time of being installed.

A bead 1b (corresponding to the second bead) in which the bead wire is formed in an annular shape in the tire peripheral direction is arranged in the annular protrusion section 10. The bead 1b in accordance with the present embodiment is arranged in such a manner that a center position 1c is positioned in a tire outer peripheral side from an outermost diameter point 8c of the rim flange 8a and in an outer side in the tire width direction, at a time of installing the rim, as shown in Fig 2. In this case, the arranged position of the bead 1b is not particularly limited as far as the bead 1b reinforces the holding of the rim flange 8a of the annular protrusion section 10. The bead wire constituting the bead 1b is not limited to the bead wire made of the same material as the bead 1a, but may be constituted, for example, by a converged body of the organic fibers, a rubber bead made of a fiber reinforcing rubber or the like. The bead 1b is preferably arranged in each of the annular protrusion sections 10 in both sides, however, may be formed in at least one annular protrusion section 10, for example, may be formed only in the side forming an outer side of a vehicle at a time of being installed.

The carcass ply 14 is wound up to an outer side in the tire width direction by the bead 1a, and the wind-up end section 15 is arranged at least in an outer side in the tire diametrical direction from the tire outer peripheral side end of the bead 1a. In the case of setting a height in the tire diametrical direction to the tire inner peripheral side end of the bead 1b on the basis of the tire outer peripheral side end of the bead 1a to h, it is arranged in such a manner that a height p in the tire diametrical direction of the wind-up end section 15 of the carcass ply 14 on the basis of the tire outer peripheral side end of the bead 1a is equal to or less than 95 % of the height h, in the present invention. In this case, if the height p becomes more than 95 % of the height h, it tends to be affected by a stress directed to the outer side in the tire diametrical direction from the bead 1b, a shear strain is generated in the wind-up section 14a of the carcass ply 14, and the stress is concentrated to the wind-up end section 15 at the run flat traveling time, whereby the durability is lowered. In this case, in the present invention, the height p is preferably equal to or less than 95 % of the height h, more preferably equal to or less than 85 %, and further preferably equal to or less than 75 %.

The reinforcing layer 16 is arranged approximately along the inner peripheral surface of the annular protrusion section 10, whereby it is possible to reinforce the inner peripheral surface of the annular protrusion section 10 so as to suppress the attrition. As the reinforcing layer 16, there is exemplified a chafer constituted by a steel cord, or an organic fiber such as a rayon, a nylon, a polyester, an aramid or the like. In the present embodiment, there is shown an example in which the tire inner peripheral side end of the reinforcing layer 16 is locked in the outer side in the tire width direction of the bead 1a, however, the reinforcing layer 16 may be wound up from the inner side to the outer side by the bead 1a.

In the run flat tire in accordance with the present invention, an effect of suppressing the deforming deflection of the side wall section 2 in the run flat state can be achieved by the annular protrusion section 10 reinforced by the bead 1b being pressed to the outer peripheral side curved surface of the rim flange 8a. Accordingly, it is possible to reduce the volume of the reinforcing rubber layer 9 at such a degree that the bending deformation mentioned above is suppressed, in comparison with the conventional structure, thereby intending to lighten the tire.

Conventionally, in the reinforcing rubber layer 9 provided in the side reinforcing type run flat tire, a rate T/H of a thickness T in the crescent maximum width position M with respect to the tire cross sectional height H gets over 0.09 and is about 0.11, however, in the run flat tire in accordance with the present embodiment, the rate T/H is set to 0.07 to 0.09 while taking into consideration the degree at which the bending deformation mentioned above is suppressed. Accordingly, it is possible to reduce the volume of the reinforcing rubber layer so as to intend to lighten the tire. If the rate T/H is less than 0.07, there is a tendency that the effect of suppressing the bending deformation by the reinforcing rubber layer 9 becomes smaller. In this case, the rate T/H is preferably between 0.07 and 0.08.

In the reinforcing rubber layer 9, the hardness in accordance with the hardness test mentioned above is preferably between 65 degree and 90 degree as mentioned above, and is more preferably between 75 degree and 85 degree. Since the hardness of the reinforcing rubber layer 9 is set within the range mentioned above, it is possible to intend to reduce the volume of the reinforcing rubber layer 9 so as to lighten the tire while effectively securing both of the run-flat durability and the ride comfort.

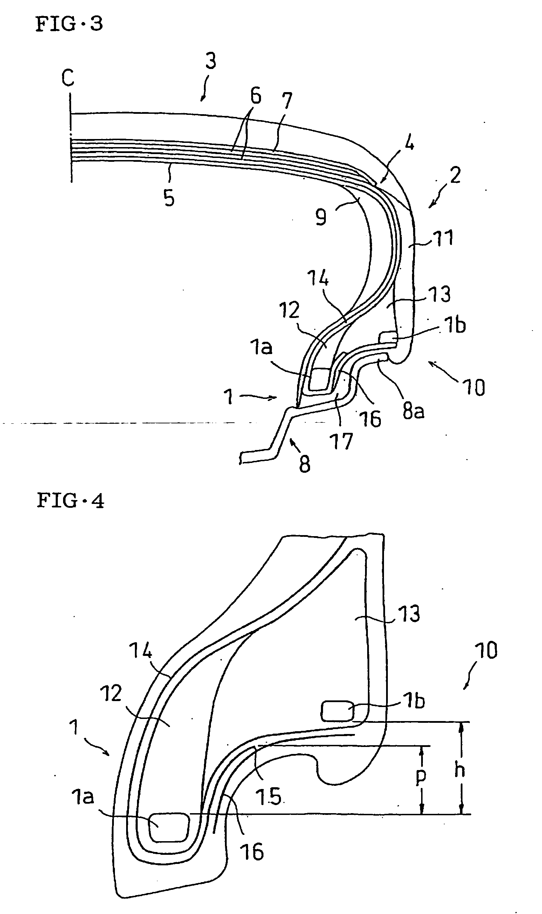

The run flat tire in accordance with the present invention is preferably provided with an annular rubber body 13 arranged toward the annular protrusion section 10 from the bead section 1, for example, as shown in Fig. 3 and 4. The annular rubber body 13 has a rubber hardness, for example, between 40 degree and 75 degree, and preferably has sufficient rigidity and crack resistance for standing against a shock repeatedly transmitted from the rim 8. The annular rubber body 13 is arranged in the outer side in the tire width direction of the bead filler 12, and is integrally formed with the bead filler 12. The integrally formed member mentioned above can be formed by extrusion molding while adhering each of the rubber materials, for example, by using a multilayer extruding machine.

In the present embodiment, the carcass ply 14 wound up to the outer side from the inner side by the bead 1a is arranged along the inner peripheral surface of the annular rubber body 13. The wind-up end section 15 of the carcass ply 14 is arranged at least in the outer side in the tire diametrical direction from the tire outer peripheral side end of the bead 1a, and is set such that the height p becomes equal to or less than 95 % of the height h in the same manner as mentioned above.

In the present embodiment, it is preferable that at least one of the bead 1a and the bead 1b is integrally formed with the member obtained by integrally forming the bead filler 12 and the annular rubber body 13. In this case, Fig. 4 shows an example in which both of the bead 1a and the bead 1b are integrally formed. Accordingly, it is possible to widely reduce a man hour and a parts number necessary for forming the bead section 1 and the annular protrusion section 10, and it is possible to simplify the work so as to improve a productivity. The integrally formed member mentioned above can be formed, for example, by adhering the bead 1a or the bead 1b to the member obtained by integrally forming the bead filler 12 and the annular rubber body 13 mentioned above.

### [manufacturing method of run flat tire]

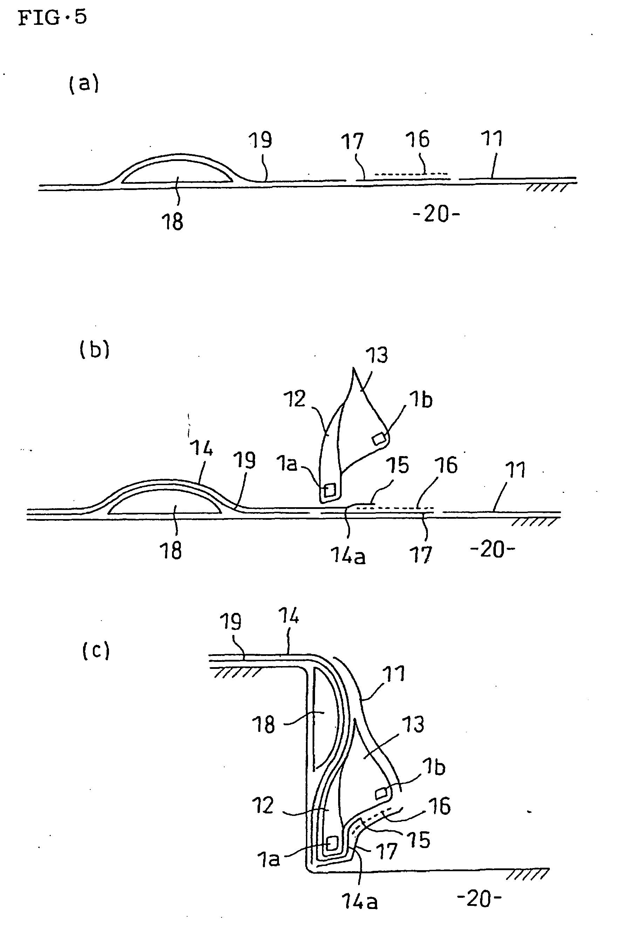

Next, a description will be given of a manufacturing method of a run flat tire shown in Figs. 3 and 4. Figs. 5(a), 5(b) and 5(c) are schematic views explaining the manufacturing method of the run flat tire in accordance with the present invention, and sequentially show arranged states of the respective members with respect to the surface to be formed. First, a cylindrical forming drum is prepared, and an outer peripheral surface thereof is set to a surface to be formed 20. The forming drum is provided with a rubber bag called a bladder in a center section (a left side in Fig. 5). Further, it is provided with a bladder for winding up the carcass ply or the like as occasion demands. In this case, it is possible to employ a conventionally known contracting and expanding mechanism having the same function in place of the bladder.

Next, a reinforcing rubber member 18 forming the reinforcing rubber layer 9 and an inner liner rubber 19 forming the inner liner layer 5 are sequentially pasted to an outer peripheral side of the surface to be formed 20 so as to be laminated. Subsequently, the rim strip rubber 17 is arranged in an outer side in a width direction of the inner liner rubber 19. The rim strip rubber 17 is arranged in such a manner that an end surface confronts the inner liner rubber 19 or end portions are overlapped.

It is preferable to arrange the side wall rubber 11 in the outer side in the width direction of the rim strip rubber 17. The side wall rubber 11 is arranged in such a manner that an end surface confront the rim strip rubber 17 or end sections are overlapped. Further, it is preferable to arrange a reinforcing layer 16 at a predetermined position in an outer peripheral side of the rim strip rubber 17. As the reinforcing layer 16, the reinforcing layer mentioned above is exemplified.

Next, the carcass ply 14 is arranged in an outer peripheral side of the surface to be formed 20. At this time, a section 14a near an end section having a predetermined width from an end section in the width direction of the carcass ply 14 is arranged in an outer peripheral side of the rim strip rubber 17. Further, in the present invention, a position of the end section 15 is adjusted in such a manner that the end section 15 of the carcass ply 14 is arranged at a position equal to or less than 95 % of the height in the tire diametrical direction to the tire inner peripheral side end of the bead 1b on the basis of the tire outer peripheral side end of the bead 1a, in a state in which the carcass ply 14 is wound up.

Subsequently, the annular bead 1a is outside inserted to the outer peripheral side of the section 14a near the end section of the carcass ply 14, the bead filler 12 is arranged in the outer peripheral side of the surface to be formed via the bead 1a, and the annular rubber body 13 integrally formed with bead filler 12, and the bead 1b are arranged in the outer side in the tire width direction of the bead filler 12. These members are previously arranged so as to be in an inside contact in an annular shape (not shown), and are outside inserted to the section 14a near the end section of the carcass ply 14 together with the annular shape, whereby it is possible to easily execute the arranging work mentioned above. The annular shape mentioned above is removed before a wind-up step mentioned below. The present invention is preferably structured such that at least one of the bead 1a and the bead 1b is integrally formed with the member obtained by integrally forming the bead filler 12 and the annular rubber body 13, and Fig. 5 shows an example in which both of the bead 1a and the bead 1b are integrally formed.

Next, the bladder provided in the center section of the forming drum is expanded, and the center section (the left side in Fig. 5) in the width direction of the obtained formed product is protruded so as to be deformed in a toroid shape. At this time, it is preferable to clamp the bead 1a from the inner peripheral side via the rim strip rubber 17, the carcass ply 14 and the like by a bead lock mechanism (not shown) embedded in an outer peripheral surface of the forming drum. Accordingly, it is possible to precisely execute the deformation mentioned above.

Further, the section 14a near the end section of the carcass ply 14 and the rim strip rubber 17 are wound up by the bead 1a, and the reinforcing layer 16 and the side wall rubber 11 are wound up together therewith. The wind-up work mentioned above may be executed individually or in a lump by a manual operation, however, the respective members can be easily wound up in a lump by applying an internal pressure to the bladder.

The section 14a near the end section of the carcass ply 14, the reinforcing layer 16 and the rim strip rubber 17 are arranged along the inner peripheral surface of the annular rubber body 13, and structure the inner peripheral surface of the annular protrusion section 10. At this time, the end section 15 of the carcass ply 14 is arranged at the position equal to or less than 95 % of the height in the tire diametrical direction to the tire inner peripheral side end of the bead 1b on the basis of the tire outer peripheral side end of the bead 1a. Further, the side wall rubber 11 is arranged toward the side wall section 2 from the annular protrusion section 10 along the outer side of the annular rubber body 13.

The belt layer 6, the belt reinforcing layer 7 and the tread rubber are arranged in the tire outer peripheral side of the formed body deformed in the toroid shape, and the green tire is formed.

### [Other embodiment]

(1) In the embodiment mentioned above, there is shown the example in which the carcass layer 4 is constituted by one carcass ply 14, however, in the present invention, the carcass layer may be constituted by a plurality of carcass plies. In such a case, it is possible to arrange in such a manner that the heights p of the wind-up end sections of all the carcass plies constituting the carcass layer become equal to or less than 95 % of the height h.
(2) The run flat tire in accordance with the present invention may be provided with a single rubber layer obtained by integrally forming the bead filler and the annular rubber body. A rubber hardness of the single rubber layer is preferably between 40 degree and 75 degree. In accordance with the structure mentioned above, it is possible to more simply form the annular protrusion section 10, and it is possible to effectively improve the productivity. In this case, the cross sectional shapes of the annular protrusion section, the annular rubber body and the bead filler are not limited to the shapes shown by the embodiments mentioned above.

Since tests are executed for specifically showing the structure and the effect of the present invention, a description will be given below of first to third examples.

### [First example]

### Durability

A durability test is executed in accordance with a method specified in JISD4230. In the case that no crack is recognized after a test stage 3, a speed and a load are continuously applied to the tire, and a test time until a problem is recognized is measured. The test is executed in both of a general durability in which a tire internal pressure is set to 180 kPa, and a run flat durability in a 0 kPa run flat state. An evaluation is executed by an index number in which a prior art 1 is set to 100. The larger the numerical value is, the longer the test time is, that is, the more excellent the durability is.

### Prior arts 1 to 2, Comparative example 1 and Examples 1 to 4

The run flat tires (tire size: 245/40ZR18) having the structure shown in Figs. 1 and 2 are manufactured, and are installed to a rim having a wheel size of 18 x 8JJ. Rates p/h of the respective tires are set to values shown in Table 1. Further, as the reinforcing rubber layers provided in the respective tires, there are prepared a reinforcing rubber layer constituted by two layers of rubber layers segmented in the tire width direction by the fiber layer as shown in the embodiment mentioned above, and a reinforcing rubber layer constituted by one layer of rubber layer provided with no fiber layer, and they are identical in a thickness and a hardness.

**Table 1**

| | Prior art 1 | Prior art 2 | Comparative example 1 | Example 1 | Example 2 | Example 3 | Example 4 |
|---|---|---|---|---|---|---|---|
| P/h(%) | 430 | 620 | 105 | 95 | 95 | 85 | 70 |
| Aspect of reinforcing rubber layer | one layer | two layers | two layers | one layer | two layers | two layers | two layers |
| General durability | 100 | 110 | 110 | 125 | 125 | 135 | 130 |
| Run flat durability | 100 | 125 | 130 | 155 | 170 | 190 | 220 |

As shown in Table 1, in the examples 1 to 4, there can be known that it is possible to avoid a generation of a shear strain in the wind-up section and a stress concentration to the wind-up end section, by setting the height p of the wind-up end section of the carcass ply within the predetermined range, and it is possible to achieve a more excellent durability than the prior arts 1 and 2 and the comparative example 1. It is known that this operation and effect is remarkable particularly in the run flat traveling, and the excellent durability can be achieved even in a state in which the reinforcing rubber layer is largely bent. Particularly, in the example 2, it is known that it is possible to prevent the crack development on the basis of the provision of the fiber layer segmenting the reinforcing rubber layer, and the run flat durability is more excellent than the example 1. In the examples 3 and 4, it is known that, since the structure is hard to be affected by the shear strain in the wind-up section and the stress concentration with respect to the wind-up end section by further lowering the height p of the wind-up end section of the carcass ply, the more excellent run flat durability than the examples 1 and 2 can be achieved.

### [Second example]

### (1) Run flat durability

A test time until the problem such as the crack, the separation or the like is recognized is measured by traveling on a drum having a diameter of 1700 mm under a condition of a tire internal pressure of 0 kPa, a speed of 90 km/h and an application of JATMA100 % load. An evaluation is executed by an index number in which a comparative example 2 is set to 100. The larger the numerical value is, the longer the test time is, that is, the more excellent the run flat durability is.

### (2) Ride comfort

A rim assembled test tire is installed to an actual car (2.5 L class domestic sedan car, two passengers), and an evaluation is executed in accordance with a feeling test by traveling on a good road or a bad road. In the feeling test, a kind of the test tire is kept a secret to the passengers, and a marking is executed in a state of traveling at the tire internal pressure of 230 kPa. An evaluation is executed by an index number in which the comparative example 2 is set to 100. The larger the numerical value is, the longer the test time is, that is, the more excellent the ride comfort is.

### (3) Rim disengagement resistance

The rim assembled test tire is installed to a front left side of the actual car, and there is executed a so-called J-turn travel of turning on a circular course having a radius of 20 m in a clockwise direction from a straight traveling. Each of the test tires is set to a run flat state having an internal pressure of O kPa, and a rim disengagement resistance is evaluated on the basis of a traveling speed (which is in proportion to a lateral G) at a time when the rim disengagement is generated. The traveling speed starts from 25 km/h, and the travel is executed until the rim disengagement is generated in accordance with a method of 5 km/h increment. An evaluation is executed by an index number in which the comparative example 2 is set to 100. The larger the numerical value is, the higher the traveling speed at a time when the rim disengagement is generated is, that is, the more excellent the rim disengagement resistance is.

### Comparative example 2

There is manufactured a test tire having a structure provided with no annular protrusion section and no bead in the outer side in the tire width direction of the bead section, while being provided with the reinforcing rubber layer constituted by two layers of rubber layers segmented in the tire width direction by the fiber layer. The tire size is set to 245/40R18 93W, and the tire is installed to a rim having a wheel size of 18 x 8JJ. A hardness of the rubber layer is set to 80 degrees in accordance with the hardness test, and a rate T/H of the reinforcing rubber layer is set to 0.11.

### Comparative example 3

There is manufactured a test tire having the same structure as the comparative example 2, except the rate T/H of the reinforcing rubber layer being set to 0.075.

### Example 5

There is manufactured a test tire having a structure provided with the annular protrusion section and the bead in the outer side in the tire width direction of the bead section, while being provided with the reinforcing rubber layer constituted by one layer of rubber layer. The reinforcing rubber layer is set to the same thickness as that of the reinforcing rubber layer provided in the comparative example 2, and the hardness in accordance with the hardness test is set to 80 degrees. Further, the tire size and the wheel size are set to the same as those of the comparative example 2. In this case, the rate p/h is set to 95.

### Example 6

There is manufactured a test tire having the structure shown in Fig. 1. In other words, the structure is made such as to be provided with the reinforcing rubber layer 9 constituted by two layers of rubber layers 9a and 9b segmented in the tire width direction by the fiber layer 24, and be provided with the annular protrusion section 10 and the bead 1b in the outer side in the tire width direction of the bead section 1. The thickness and the hardness of the reinforcing rubber layer 9, the tire size and the wheel size are set to be the same as those of the comparative example 2. Further, the rate p/h is set to 95.

### Example 7

There is manufactured a test tire having the same structure as the example 6, except the rate T/H of the reinforcing rubber layer being set to 0.075.

**Table 2**

| | Comparative example 2 | Comparative example 3 | Example 5 | Example 6 | Example 7 |
|---|---|---|---|---|---|
| Fiber layer 13 | with | with | without | with | with |
| Bead 1b | without | without | with | with | with |
| T/H | 0.11 | 0.075 | 0.11 | 0.11 | 0.075 |
| Run flat durability | 100 | 90 | 90 | 110 | 100 |
| Ride comfort | 100 | 110 | 90 | 90 | 100 |
| Rim disengagement resistance | 100 | 90 | 150 | 150 | 140 |

Since the annular protrusion section reinforced by the bead is pressed by the outer peripheral side curved surface of the rim flange and the fitting force to the rim is increased, the example 5 is more excellent in the rim disengagement resistance in comparison with the comparative example 2, however, since the example 5 does not have the fiber layer in the reinforcing rubber layer, it is known that the example 5 is inferior to the comparative example 2 in the run flat durability and the ride comfort. On the contrary, it is known that the example 6 can achieve an excellent rim disengagement resistance while compensating the defect so as to secure the run flat durability and the ride comfort.

In the comparative example 3, it is known that the effect of suppressing the bending deformation of the side wall section becomes small by reducing the volume of the reinforcing rubber layer, and the run flat durability is deteriorated in comparison with the comparative example 2. On the contrary, in the example 7, the volume of the reinforcing rubber layer is lowered in the same manner as the comparative example 3, however, it is known that the example 7 achieves a more excellent run flat durability in comparison with the comparative example 3, since the bending deformation of the side wall section is suppressed by the annular protrusion section reinforced by the bead. In other words, in the example 7, it is possible to intend to lighten the tire at a degree of reducing the volume of the reinforcing rubber layer, while securing the run flat durability.

### [Third example]

### (1) Productivity

A time necessary for forming the tire is measured, and a productivity is evaluated. An evaluation is executed by an index number in which the prior art 3 is set to 100. The larger the numerical value is, the longer the forming time is, that is, the more excellent the productivity is.

### (2) Uniformity

A radial force variation (RFV) is measured on the basis of the test method specified in JISD4233, and a uniformity of the tire is evaluated. Specifically, the tire is pressed to the rotating drum in such a manner that a predetermined load is applied, thereby measuring a fluctuation amount of a reaction force in a radial direction generated at a time of rotating the tire while keeping an interval between both axes. A sample number is set to 36, and an evaluation is executed on the basis of an average value. An evaluation is executed by an index number in which a result of the prior art 3 is set to 100. The smaller the index number is, the smaller the fluctuation amount is, that is, the more excellent the uniformity is.

### (3) Run flat durability

A durability test is executed in accordance with a method specified in JISD4230. In the case that the crack or the like is not recognized even after the test stage 3, the speed and the load are continuously applied to the tire, and the test time until the problem is recognized is measured. The test is executed in a state in which the tire is installed to the rim having the size of 18 x 8J, and is set to a run flat state having the tire internal pressure of 0 kPa. An evaluation is executed by an index number in which the prior art 3 is set to 100. The larger the numerical value is, the longer the test time is, that is, the more excellent the durability is.

### Prior art 3

A run flat tire (size 245/40R18) having the structure shown in Fig. 6 is manufactured in accordance with a conventional manufacturing method. In other words, as shown in Fig. 7, the bead section 1 and the annular protrusion section 10 are formed by winding up the carcass ply 14 in such a manner as to pinch the bead 1a and the bead filler 12, and pasting a lot of members such as the rubber member 22, the reinforcing layer 16, the bead 1b and the like to the outer peripheral side thereof.

### Example 8

A run flat tire (size 245/40R18) having the structure shown in Figs. 3 and 4 is manufactured in accordance with a manufacturing method of the present invention. In other words, as shown in Fig. 5, the bead section 1 and the annular protrusion section 10 are formed by arranging the member obtained by integrally forming the bead 1a, the bead filler 12, the annular rubber body 13 and the bead 1b in the outer peripheral side of the section 14a near the end section of the carcass ply 14, and winding up the section 14a near the end section of the carcass ply 14, the rim strip rubber 17 and the like by the bead 1a.

**Table 3**

| | Prior art 3 | Example 8 |
|---|---|---|
| Productivity | 100 | 280 |
| RFV | 100 | 62 |
| Run flat durability | 100 | 130 |

As shown by result in Table 3, it is known that since the parts number and the man hour are comparatively small, and it is easy to form the bead section and the annular protrusion section, the example 8 is more excellent than the prior art 3. Further, it is known that the example 8 is more excellent in the uniformity in comparison with the prior art 3 manufactured by pasting a lot of members. Further, it is known that the example 8 is more excellent in the durability in comparison with the prior art 3, by setting the wind-up end section to a predetermined height while integrally forming the bead filler and the annular rubber body.

## Claims

1. A run flat tire comprising:
a pair of bead sections (1) each having an annular first bead (1a);
side wall sections (2) respectively extending to an outer side in a tire diametrical direction from said bead sections;
a carcass layer (4) bridged between said bead sections and constituted by a carcass ply (14) wound up by said first bead (1a);
a reinforcing rubber layer (9) arranged in an inner side of said carcass layer (14) of said side wall section (2) so as to be formed in a crescent cross sectional shape;
an annular protrusion section (10) protruding to an outer side in a tire width direction from at least one of said bead sections (1), and having an inner peripheral side surface extending along an outer peripheral side curved surface of a rim flange; and
an annular second bead (1b) arranged in said annular protrusion section (10),
wherein an end section (15) of said wound-up carcass ply is arranged at a position equal to or less than 95 % of a heighth in the tire diametrical direction to a tire inner peripheral side end of said second bead (1b) on the basis of a tire outer peripheral side end of said first bead (1a),
wherein said run flat tire is further provided with an annular rubber body (13) arranged toward said annular protrusion section (10) from said bead section, and integrally formed with a bead filler (12) arranged in a tire outer periphery of said first bead (1a).

2. A run flat tire as claimed in claim 1, wherein said run flat tire is provided with a fiber layer segmenting said reinforcing rubber layer in the tire width direction.

3. A run flat tire as claimed in claim 2, wherein a rate T/H of a thickness T in a maximum width position of the crescent shape of said reinforcing rubber layer with respect to a tire cross sectional height H is between 0.07 and 0.09.

4. A run flat tire as claimed in claim 2, wherein said carcass layer is constituted by one carcass ply.

5. A run flat tire as claimed in claim 1_{.} wherein at least one of said first bead and said second bead is integrally formed in a member obtained by integrally forming said in filler and said annular rubber body.

6. A manufacturing method of a run flat tire, comprising a step of arranging predetermined members in an outer peripheral side of a surface to be formed on a cylindrical mold so as to form a bead section having an annular first bead (1a) and a bead filler (12) arranged in a tire outer periphery of said first bead, and an annular protrusion section (10) protruding to an outer side in a tire width direction of the bead section and having an annular second bead (1b), wherein the manufacturing method comprises:
a step of arranging a rim strip rubber (17) in an outer peripheral side of said surface to be formed (20) along a tire circumferential direction;
a step of arranging a carcass ply (14) in an outer peripheral side of said surface to be formed (20) and arranging a section (14a) near an end section of the carcass ply in an outer peripheral side of said rim strip rubber;
a step of arranging said first bead (1a) in an outer peripheral side of the section near the end section of said carcass ply; and
a step of winding the section (14a) near the end section of said carcass ply and said rim strip rubber (17) by said first bead (1a), and
wherein a position of the end section is adjusted in such a manner that the end section of said wound-up carcass ply is arranged at a position having a height equal to or less than 95 % the height in a tire diametrical direction to a tire inner peripheral side end of said second bead on the basis of a tire outer peripheral side end of said first bead, at a time of arranging the section near the end section of said carcass ply in the outer peripheral side of said rim strip rubber,
wherein the section near the end section of said carcass ply is wound up after arranging said bead filler in an outer peripheral side of said surface to be formed via said first bead, and arranging the annular rubber body (13) integrally formed with the bead filler (12) and said second bead in an outer side in the tire width direction of the bead filler.

7. A manufacturing method of a run flat tire as claimed in claim 6, wherein at least one of said first bead and said second bead is integrally formed with the member obtained by integrally forming said bead filler and said annular rubber body.

## Patentansprüche

1. Run-Flat-Reifen, welcher enthält:
ein Paar von Wulstsektionen (1), wobei jede einen ringförmigen ersten Wulst (1a) hat;
Seitenwandsektionen (2), welche sich jeweils in einer zum Rad diametralen Richtung von den Wulstsektionen zu einer Außenseite hin erstrecken;
eine Karkassenschicht (4), welche die Wulstsektionen überbrückt und durch eine Karkassenlage (14) gebildet ist, welche durch den ersten Wulst (1a) aufgewickelt ist;
eine Verstärkungs-Gummischicht (9), welche an einer Innenseite von der Karkassenschicht (14) von der Seitenwandsektion (2) derart angeordnet ist, dass sie in einer sichelförmigen Schnittansichtsform ausgebildet ist;
eine ringförmige Vorsprungssektion (10), welche in einer Breitenrichtung des Rades von zumindest einer der Wulstsektionen (1) zu einer Außenseite hin vorspringt und eine Innenumfangs-Seitenoberfläche hat, welche sich entlang einer Außenumfangsseite einer gekrümmten Oberfläche eines Felgenflansches erstreckt; und
einen ringförmigen zweiten Wulst (1b), welcher in der ringförmigen Vorsprungssektion (10) angeordnet ist;
wobei eine Endsektion (15) der aufgewickelten Karkassenlage an einer Position gleich oder weniger als 95 % einer Höhe (h) in der Diametralrichtung des Rades zu einem Innenumfangs-Seitenende des Rades des zweiten Wulstes (1b) auf Basis eines Außenumfangs-Seitenendes des Rades des ersten Wulstes (1a) angeordnet ist;
wobei der Run-Flat-Reifen ferner mit einem ringförmigen Gummikörper (13) bereitgestellt ist, welcher zu der ringförmigen Vorsprungssektion (10) von der Wulstsektion angeordnet ist und
einstückig mit einem Wulst-Füllstoff (12) ausgebildet ist, welcher in einem Außenumfang des Rades des ersten Wulstes (1a) angeordnet ist.

2. Run-Flat-Reifen nach Anspruch 1, wobei der Run-Flat-Reifen mit einer Faserschicht bereitgestellt ist, welche die Verstärkungs-Gummischicht in der Breitenrichtung des Rades segmentiert.

3. Run-Flat-Reifen nach Anspruch 2, wobei ein Verhältnis T/H von einer Dicke T in einer maximalen Breitenposition der sichelförmigen Form der Verstärkungs-Gummischicht mit Bezug auf eine Rad-Querschnittshöhe H zwischen 0,07 und 0,09 beträgt.

4. Run-Flat-Reifen nach Anspruch 2, bei welchem die Karkassenschicht durch eine Karkassenlage gebildet ist.

5. Run-Flat-Reifen nach Anspruch 1, bei welchem zumindest einer von dem ersten Wulst und dem zweiten Wulst einstückig mit einem Element ausgebildet ist, welches erlangt ist, indem es einstückig in den Füllstoff und den ringförmigen Gummikörper ausgebildet ist.

6. Herstellungsverfahren eines Run-Flat-Reifens, welches einen Schritt zum Anordnen von vorbestimmten Elementen in einer Außenumfangsseite von einer Oberfläche enthält, welche auf einem zylindrischen Guss auszubilden ist, um somit eine Wulstsektion auszubilden, welche einen ringförmigen ersten Wulst (1a) und einen Wulst-Füllstoff (12)- hat, welcher in einem Rad-Außenumfang des ersten Wulstes angeordnet ist, und eine ringförmige Vorsprung-Sektion (10) auszubilden, welche in einer Rad-Breitenrichtung der Wulst-Sektion zu einer Außenseite vorspringt und einen ringförmigen zweiten Wulst (1b) hat, wobei das Herstellungsverfahren enthält:
einen Schritt zum Anordnen eines Felgenstreifengummis (17) an einer Außenumfangsseite von der Oberfläche, welche entlang einer Umfangsrichtung des Rades auszubilden ist (20);
einen Schritt zum Anordnen einer Karkassenlage (14) an einer Außenumfangsseite von der auszubildenden (20) Oberfläche und zum Anordnen von einer Sektion (14a) nahe einer Endsektion von der Karkassenlage in einer Außenumfangsseite des Felgenstreifengummis;
einen Schritt zum Anordnen des ersten Wulstes (1a) in einer Außenumfangsseite von der Sektion nahe der Endsektion von der Karkassenlage; und
einen Schritt zum Wickeln der Sektion (14a) nahe der Endsektion von der Karkassenlage und des Felgenstreifengummis (17) durch den ersten Wulst (1a); und
wobei eine Position von der Endsektion derart eingestellt wird, dass die Endsektion der aufgewickelten Karkassenlage an einer Position angeordnet wird, welche eine Höhe gleich oder weniger als 95 % der Höhe in einer Rad-Diametralrichtung zu einem Innenumfangs-Seitenende des Rades des zweiten Wulstes hat, angeordnet auf Basis des Außenumfangs-Seitenendes des Rades des ersten Wulstes zu einem Zeitpunkt, bei welchem die Sektion nahe der Endsektion von der Karkassenlage in der Außenumfangsseite des Felgenstreifengummis angeordnet wird,
wobei die Sektion nahe der Endsektion von der Karkassenlage nach dem Anordnen des Wulst-Füllstoffes in einer Außenumfangsseite von der Oberfläche, welche über den ersten Wulst ausgebildet wird, und einem Anordnen des ringförmigen Gummikörpers (13), welcher einstückig mit dem Wulst-Füllstoff (12) und dem zweiten Wulst in einer Außenseite in der Rad-Breitenrichtung des Wulst-Füllstoffes einstückig ausgebildet ist, aufgewickelt wird.

7. Herstellungsverfahren eines Run-Flat-Reifens nach Anspruch 6, wobei zumindest einer von dem ersten Wulst und dem zweiten Wulst einstückig mit dem Element ausgebildet wird, welches durch ein einstückiges Ausbilden des Wulst-Füllstoffes und des ringförmigen Gummikörpers erlangt wird.

## Revendications

1. Pneumatique à flancs renforcés, comprenant :
une paire de sections de talon (1) ayant chacune un premier talon annulaire (1a);
des sections de paroi latérale (2) s'étendant respectivement vers un côté extérieur dans une direction diamétrale de pneumatique à partir desdites sections de talon ;
une couche de carcasse (4) emmanchée/pontée entre lesdites sections de talon et constituée par une toile de pneumatique (14) remontée par ledit premier talon (1a) ;
une couche de caoutchouc de renfort (9) agencée sur un côté intérieur de ladite couche de carcasse (14) de ladite section de paroi latérale (2), afin d'être formée en une forme de croissant en section transversale ;
une section de protubérance annulaire (10) faisant saillie vers un côté extérieur dans une direction de largeur de pneumatique à partir d'au moins une desdites sections de talon (1), et ayant une surface de côté périphérique intérieur s'étendant le long d'une surface incurvée de côté périphérique extérieur d'une joue de jante ; et
un second talon annulaire (16) agencé dans ladite section de protubérance annulaire (10),
dans lequel une section d'extrémité (15) de ladite toile de carcasse remontée est agencée dans une position égale ou inférieure à 95 % d'une hauteur dans la direction diamétrale de pneumatique jusqu'à une extrémité de côté périphérique intérieur dudit second talon (16) sur la base d'une extrémité de côté périphérique extérieur dudit premier talon (1a),
dans lequel ledit pneumatique à flancs renforcés est en outre muni d'un corps en caoutchouc annulaire (13) agencé dans la direction de ladite section de protubérance annulaire (10) à partir de ladite section de talon, et formé en un seul bloc avec une garniture de talon (12) agencée dans une périphérie extérieure de pneumatique dudit premier talon (1a).

2. Pneumatique à flancs renforcés selon la revendication 1, dans lequel ledit pneumatique à flancs renforcés est muni d'une couche fibreuse segmentant ladite couche en caoutchouc de renfort dans une direction de largeur de pneumatique.

3. Pneumatique à flancs selon la revendication 2, dans lequel un taux T/H d'une épaisseur T dans une position de largeur maximum de la forme de croissant de ladite couche en caoutchouc de renfort par rapport à une hauteur de section transversale de pneumatique H est entre 0,07 et 0,09.

4. Pneumatique à flancs selon la revendication 2, dans lequel ladite couche de carcasse est constituée par une toile de carcasse.

5. Pneumatique à flancs selon la revendication 1, dans lequel au moins un desdits premier et second talons est formé en un seul bloc dans un élément obtenu en formant en un seul bloc ladite garniture et ledit corps en caoutchouc annulaire.

6. Procédé de fabrication d'un pneumatique à flancs renforcés, comprenant une étape d'agencement d'éléments prédéterminés sur un côté périphérique extérieur d'une surface devant être formée sur un moule cylindrique, afin de former une section de talon ayant un premier talon annulaire (1a) et une garniture de talon agencée sur une périphérie extérieure de pneumatique dudit premier talon, et une section de protubérance annulaire (10) faisant saillie sur un côté extérieur dans une direction de largeur de pneumatique de la section de talon, et ayant un second talon annulaire (16), le procédé de fabrication comprenant les étapes consistant à :
agencer un caoutchouc de protecteur de jante (17) dans un côté périphérique extérieur de ladite surface devant être formée (20) le long d'une direction circonférentielle de pneumatique ;
agencer une toile de pneumatique (14) sur un côté périphérique extérieur de ladite surface devant être formée (20), et agencer une section (14a) proche d'une section d'extrémité d'une toile de pneumatique sur un côté périphérique extérieur dudit caoutchouc protecteur de jante ;
agencer ledit premier talon (1a) sur un côté périphérique extérieur de la section proche de la section d'extrémité de ladite toile de carcasse ; et
enrouler la section (14a) proche de la section d'extrémité de ladite toile de carcasse et ledit caoutchouc protecteur de jante (17) par ledit premier talon (1a), et
dans lequel une position de la section d'extrémité est ajustée de telle sorte que la section d'extrémité de ladite toile de carcasse remontée est agencée dans une position ayant une hauteur égale à ou inférieure à 95 % de la hauteur, dans une direction diamétrale de pneumatique, jusqu'à une extrémité de côté périphérique intérieur dudit second talon sur la base d'une extrémité de côté périphérique extérieur dudit premier talon, au moment d'agencer la section proche de la section d'extrémité de ladite toile de carcasse sur le côté périphérique extérieur dudit caoutchouc protecteur de jante,
dans lequel la section proche de la section d'extrémité de ladite toile de carcasse est remontée après l'agencement de ladite garniture de talon sur un côté périphérique extérieur de ladite surface devant être formée par l'intermédiaire dudit premier talon, et l'agencement du corps en caoutchouc (13) formé en un seul bloc avec la garniture de talon (12) et ledit second talon sur un côté extérieur dans la direction de largeur de pneumatique de la garniture de talon.

7. Procédé de fabrication d'un pneumatique à flancs renforcés selon la revendication 6, dans lequel au moins un desdits premier et second talons est formé en un seul bloc avec l'élément obtenu en formant en un seul bloc ladite garniture de talon et ledit corps en caoutchouc annulaire.
